# EUROPEAN PATENT APPLICATION

(11) **EP 0 895 248 A1**
(43) Date of publication of application: **03.02.1999**
(21) Application number: 97500128.0
(22) Date of filing: 29.07.1997
(51) Int. Cl.: G21C 3/334

(54) **System for joining the bottom head, independent dashpot and reinforced guide tubes in nuclear reactor fuel elements**

(71) Applicant: EMPRESA NACIONAL DEL URANIO, S.A., E-28040 Madrid (ES)
(72) Inventor: Hernando, Emilio Diaz, 28040 Madrid (ES)
(74) Representative: Carpintero Lopez, Francisco

(57) **Abstract**

The system relies on a special shape of the dashpot plug (40) and the guide tube plug (42) which have respective conical sectors (52, 57), interconnectable through a similarly conical plane (64) which ensure a perfect centring and an antirotatory coupling between both parts when they are fixed with the assistance of a screw (32) that also fixes them to the bottom head plate (10), the dashpot or damper plug (40) moreover having a second flat and slotted cone (50), that is resiliently and radially contractible, capable of extending beyond the cone (57) of the guide tube plug (42) and engaging an inner box member (58) of the latter, where it is locked by springback.

## Description

### OBJECT OF THE INVENTION

The present invention concerns the field of nuclear reactor fuel elements, and specifically concentrates on a system for joining the guide tubes to the independent dashpot and the bottom head, once the expansions between the bushings of all the grids and the guide tube have been provided, thereby to achieve a better attachment and positioning, an antirotatory effect and an elimination of vibrations, besides a number of additional advantages which will become clear throughout the present disclosure.

### BACKGROUND OF THE INVENTION

In most nuclear reactors, the reactor core is constituted by a large number of fuel assemblies. Conventional designs of such fuel assemblies include a given quantity of fuel rods and guide tubes held in an orderly arrangement by grids spaced along the fuel assembly and joined to the heads. The top and bottom heads at the opposite ends of the fuel assembly are joined to the guide tubes which project slightly above and below the ends of the fuel rods. At the top end of the fuel assembly, the guide tubes are inserted in through bores in the adapter plate of the top head by means of bushings to be joined to such head and at the bottom end the guide tubes are inserted in caps and in turn screwed to the bottom head.

For factory assembly, or in case of the fuel assembly having to be repaired at the station, the fuel rods are removed from or inserted in the grids through the top or bottom (as required) of the fuel assembly, with the top or bottom heads dismounted to allow their insertion.

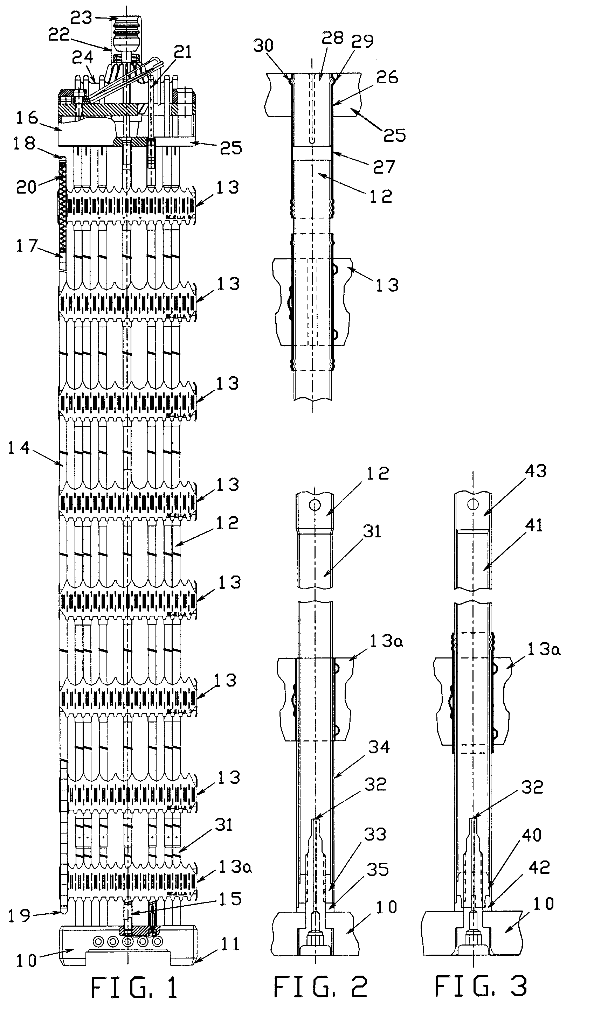

The bottom of the guide tubes have a necking known as a dashpot, and a plug welded to the tube is coupled at their end, which plug has a threaded bore. The guide tubes form the structure of the fuel assembly and the necking serves to dampen the impact of the control rods as they fall freely from their removed position, penetrating from the top head to very close to the bottom head. The bottom of the guide tube necking enters a cap which consists of a tube with a plug welded at its lower end having a through bore. This cap is fixed to the lower grid by welding and its plug is seated on the bottom head, with a screw housing its head in the plate of such head and crossing through a bore provided in such plate, in turn passing through the bore of the cap plug and being screwed in the guide tube plug, locking the cap between the guide tube plug and the bottom head plate, joining the same (see figure 2).

The grids comprise latticed bands (plates) and have bushings (tubes), as many as there are guide tubes, which are welded to the grid bands. The inside of the bushings (tubes) fits the outer diameter of the guide tubes.

In order to fix the grids to the guide tubes, the grid bushings are provided with expansions from the inside of the guide tubes, which expansions comprise inserting lobed pincers into the same which, upon the lobes expanding, provide projections on their walls, thereby joining the two. This operation is performed with the guide tube plugs fixed to the bottom head by means of the screws, to avoid longitudinal deformations.

The lower grid is not anchored to the guide tube walls (has no expansions), but, as described above, is fixed to the caps which extend to the upper face of the bottom head plate.

With the bottom head mounted and the top head dismounted, the fuel rods are inserted from the upper end, run through the grids and are held with springs and projections arranged on the bands, the springs and projections trapping the fuel rods and positioning the same evenly spaced from each other. Once the rods have been mounted, the top head is fixed as described above.

When the bottom head is dismounted, the lower grid caps are free, but since they are welded to the grid, they remain supported by the fuel rods which cross the lower grid.

Fuel assemblies may bend (because they are extremely thin) when they have been in the reactor, due to the heat loads they must withstand, the neutron flow and the core plates compressing the same by means of the top head springs.

In order to decrease these deformations of the fuel assembly as far as possible, its structure is stiffened, increasing the thickness of the guide tube walls and providing continuous diameters without a necking portion.

In order for damping to continue to be provided, what used to be a necking of the guide tube (dashpot) is constituted by a tube of smaller diameter which enters through the inside of the guide tube, which tube has a plug welded to its lower end with a threaded bore, which we shall hereinafter refer to as a dashpot independent from this tube and plug assembly, where the screw is coupled, locking the guide tube plug against the dashpot plug and the bottom head plate, once the grids have all been joined to the guide tube.

Since the cap disappears, the lower grid which used to be joined to the same is now joined, as the rest, to the guide tube.

### DESCRIPTION OF THE INVENTION

The invention provides an attachment of the dashpots to the guide tube whereby both members are assembled by means of a clip mechanism consisting of a male member with a projecting cylindrical portion in the dashpot plugs, transverse slots being provided in said plugs to facilitate the adaptability upon being compressed and then retrieving its original shape, to be 〈〈anchored〉〉 upon reaching the gap of the box member of the female member provided in the guide tube plug, yielding an inseparable couple.

The mechanism does not allow the plugs to turn when the guide tube screws are screwed, for both the dashpot plugs and the guide tube plugs are provided with a truncated cone surface, a male surface in the dashpot and a female surface in the guide tubes, which (set of cones) provide friction between their surfaces, upon being 〈〈anchored〉〉 to each other, overriding the forces exerted by the screws as they are screwed in the dashpot plug.

The system affords a substantial centring between the guide tubes, dashpots and the bottom head, for its components comprise cones which adjust their clearances at the centre of said cones.

Given the clearance between the guide tube and the dashpot tube, there might be vibrations, since the dashpot is very long and is only fixed at its lower end. This is avoided by providing the upper end of the dashpot with a funnel shape, adjusting the same with interference to the inner diameter of the guide tube with a minimum interface. In order for the same to be mounted without difficulty, through the inside of the guide tube, and to be adapted to the latter, it is provided with longitudinal slots at this end. The funnel shape moreover allows a better access for the control rods.

In accordance with another of the characteristics of the invention, the gaps of its components are connected to allow the evacuation of water residing between the two, through one of the slots of the dashpot plug cone and a bore located at the lower end of the dashpot tube.

Upon mounting the dashpot, it finds its position on its own without having to be guided nor directed and upon pressing the plugs, they self-lock each other.

The dashpot will be mounted after the grids are mounted and joined to the guide tubes, for the attachment of the grids is made with expansions from within the guide tube.

In order to provide the expansions, the guide tube plug is provided with an engagement area for the tightening tool substituting the guide tube screw, by means of a box member within the same.

This mechanism is self-adjustable once the plugs and the bottom head or otherwise a dolly (rigid surface) have been drawn close.

Once the components are drawn close, both plugs are pressed or a screw is inserted and screwed into the dashpot plug. Once it is tightened up (with tension) the slotted cone of the male member is seated on the female cone of the guide tube plug and runs thus, penetrating as pressure is exerted or the screw is turned, until it reaches the housing located in the guide tube plug, whereupon it retrieves its original position, a plug being locked to the other and the second cone of the dashpot plug becoming operative in the same female cone along which the first cone ran, thereby to prevent rotation of the dashpot due to the adjustment interference between cones.

These plugs are provided with ridges and bevels to facilitate the entrance of both tubes and the screw and cones, which moreover allow its components to be seated.

Now, therefore, and in accordance with the foregoing, the system of the invention offers a number of improvements which are essentially concentrated on the following features:
- The independent dashpots are not allowed to move.
- Rotation protection is provided.
- A better positioning of the guide tubes is determined with respect to the bottom head plate.
- Vibrations are prevented between the dashpots and the guide tubes.
- Water residing between both tubes is allowed to be evacuated.
- The components are positioned and adjusted automatically to each other.
- There is no deformation of the tubes during the assembly, for their components are not subsequently altered.
- A tightening tool may be connected at the guide tube plug in order to ensure that the guide tubes are straight when the expansions are provided therein.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:
Figure 1.- Is an elevation view of a conventional reconstructible fuel assembly with cut-away areas, in which all fuel rods except one have been suppressed for the guide tubes with the necking and grids coupled to such tubes to be clearer and easier to understand.
Figure 2.- Is an enlarged cross-section of the guide tube with the bottom and top head plates, showing the conventional connection of the guide tube with a necking at its lower end and the conventional cap screwed to the bottom head and at the upper end the connection of the top head with the coupling and joining tube, as well as the attachment of the grids to the guide tube.
Figure 3.- Is a cross-section identical to that of figure 2, albeit with the continuous guide tube and the independent dashpot therein, showing the connection of its plugs, representing the improved characteristics of the present invention. The top end has been omitted since it is the same as in figure 2.
Figure 4.- Is a longitudinal section of the dashpot plug with a plan view to allow the slots at its end to be seen, one of which is higher to allow the evacuation of water residing between plugs and including the improved characteristics of the present invention.
Figure 5.- Is an axial view, along A, of the plug of the preceding figure.
Figure 6.- Is a section of the guide tube plug which includes the improved characteristics of the present invention.
Figure 7.- Is a section of the components of the joining structure in which the dashpot tube (internal) and the guide tube (external) of the reconstructible fuel assembly can be seen at the time when the plugs begin to penetrate, including the improved characteristics of the present invention.
Figure 8.- Is a section of the components of the joining structure with the plugs in their permanent locking position at their final assembly, showing how the components are assembled with the guide tube screw and the bottom head plate, as well as the bore in the dashpot tube to allow the evacuation of water.

### PREFERRED EMBODIMENT OF THE INVENTION

With reference to these figures and particularly figures 1 and 2, the fuel assembly can be seen to essentially include a bottom end structure or bottom head (10) to support the assembly on the lower plate (not shown) of a reactor core (not shown) standing on its legs (11) and a number of guide tubes (12) extending longitudinally and projecting above the bottom head (10) forming neckings at the bottom ends of the guide tubes (dashpots) (31) for damping the fall of the control rods (21), provided at its end with a plug (33) welded to the tubes; the guide tubes penetrate the caps (34) which carry another plug (35) having a through bore. The caps are welded to the lower grid (13a) and are seated on the bottom head. Fixing takes place with the guide tube (32) screws, with the screwheads housed in the bottom head bores, crossing the through bores of the head (10), the through bores of the plugs (35) of the caps and being screwed at the plugs (33) of the dashpots (31) of the guide tubes. The assembly (figure 1) also includes a plurality of transverse grids (13) and (13a) longitudinally spaced along the guide tubes (12) and an organised array of fuel rods (14) spaced transversely and supported by the grids (13) and (13a). The fuel assembly (figure 1) also has an instrumentation tube (15) located at its centre and a top end structure or top head (16) removably joined to the upper ends of the guide tubes (12) as described hereinafter, forming an integral assembly that may be handled conventionally without the assembly components being damaged.

As noted above, in their arrangement within the assembly (figure 1), the fuel rods (14) are kept in a spaced position from each other by the grids (13) and (13a) which lie along the fuel assembly. Each fuel rod (14) includes fuel pellets (17) and the opposite ends of the rod are closed by means of upper and lower plugs (18) and (19) to seal the rod tightly. A coil rod spring (20) is normally placed between the upper plug (18) and the pellets (17) to hold the pellets still and together within the rod (14). The fuel pellets (17) composed of a fissile material are responsible for originating the reactive power of the reactor core. A moderator/coolant liquid such as water, or water containing boron, is pumped upwards along the core fuel assembly in order to remove the heat generated therein for producing useful work.

A number of control rods (21) are provided to control the fission process, moving up and down within the guide tubes (12), lying in predetermined positions within the fuel assembly (figure 1). Specifically, a mechanism for the bundle of control rods (22) is associated with the top head (16) and has an inwardly threaded cylindrical member (23) with a plurality of radial arms (24). Every arm is connected to one or several control rods (21) so that the control mechanism (22) is operable to move the control rods (21) vertically in the guide tubes (12), therewith to control the fission process. On being lowered, these control rods come across a necking (31) in the guide tubes (dashpot) which damps their fall, diminishing the penetration rate to their final position, which is at the height of the lower grid (13a). The control rods (21) enter very tightly into the inside diameter of the dashpot tube (31) and the latter must therefore be devoid of any deformation whatsoever.

The bottom head (10) is sectioned by the plate where the plugs are fixed with the threaded bore (33) of the lower ends of the guide tubes (31). The caps (34, 35) of the lower grid (13a) are fitted at this end and welded to the grid bands, the cap end carries welded plugs (35) with a bore through which a screw (32) penetrates which, upon entering the threaded bore of the guide tube plug (33), locks the caps of the lower grid.

With reference to figures 1 and 2, the top head (16) has an adapter plate on the bottom portion (25) with several through bores (26) (only one is shown). In order to be able to remove the fuel rods (14), the adapter plate (25) of the top head (16) is removably joined to the upper end areas (27) of the guide tubes (12) with each joining tube (28) and allows the said joining tube to be removed from the guide tube (12), rendering it reusable.

The structure for joining the top head of the reconstructible fuel assembly (figures 1 and 2) includes a plurality of housings (only one is shown) defined in the adapter plate (25) of the top head by the through bore (26), each containing a circumferential annular channel (29), a plurality of coupling tubes (27) defined at the upper end areas of the guide tubes (12) and a plurality of joining tubes (28) inserted in the coupling tubes (27) to hold them together within the housings (29).

Each coupling tube (27) is defined by a circumferential annular flanging (30) at the upper area of each guide tube (12) a short distance below its upper edge. A plurality of elongate axial slots are formed at the upper end area of each guide tube (12) to allow an elastic closure of the slotted area to a compressed position, allowing the circumferential annular flanging (30) to be moved in and out of the annular channel (29) through the through bore (26) of the adapter plate (25). The annular flanging (30) fits into the annular channel (29) when the upper end area of the coupling tube (27) is inserted in the bore (26) of the adapter plate (25) and has taken up its expanded position. Thus, the coupling tube (27) of each guide tube (12) can be moved in and out of its attachment in each of the housings (29) of the adapter plate (25).

From this basic and conventional construction, and moving on now to one of the characteristics of the invention, shown in figures 3 to 8, the bottom head (10) which, together with the guide tubes and the upper head form the structure of the fuel assembly, has bores (68) housing the head and part of the shank of the screw (32), whereas the upper face (66) of said bottom head or plate (10) support the guide tube plugs (42), positioning the same and ensuring the structure of the fuel assembly once the guide tube screws (32) are tightened.

Now, therefore, each guide tube screw (32) joins the dashpot assembly (40, 41) to the guide tube assembly (42, 43) and to the bottom head (10) through the threaded bore (60) with which the dashpot plug (40) is provided, forming a block.

Said dashpot plug (40) connects the dashpot, the guide tube and the bottom head through the guide tube screw (32), the surface (53) trapping the guide tube plug and standing on the upper face (56), whereas the lower face (65) stands on the bottom head plate (10).

The dashpot tube (41) or internal tube allows the control rods to be damped, allowing the same to run along its inside, whereas the guide tube (43) is the element forming the structure of the fuel assembly, to which the grids and heads are fixed, and allowing the core components, i.e. plug device, sources, control rods, etc., to be received inside the same.

The guide tube (43) is fitted with a plug (42), being the component that supports the stability of the guide tubes, duly positioning the same.

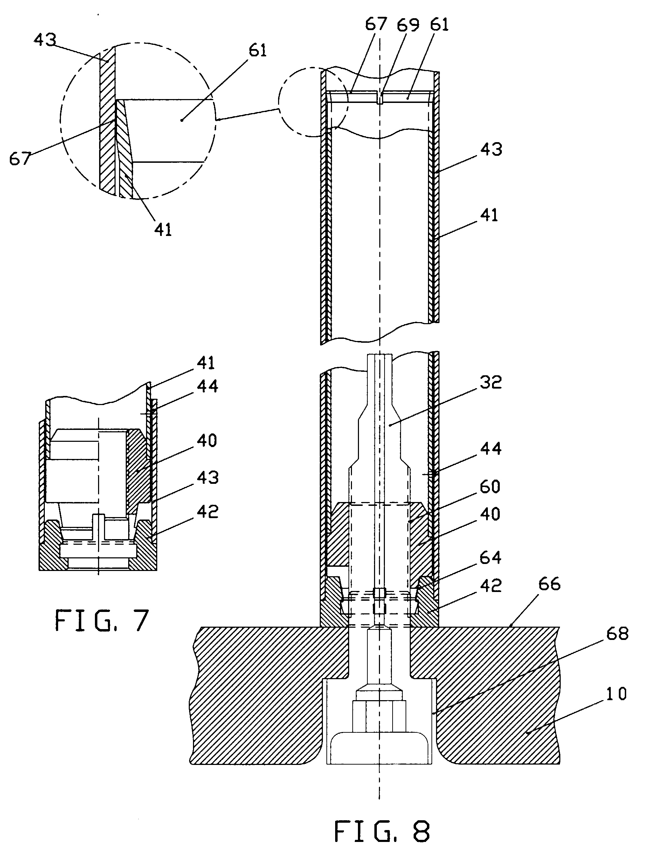

A communication bore (44) is established between the guide tubes (43) and the dashpots (41) for evacuation, which is clearly visible in figures 7 and 8.

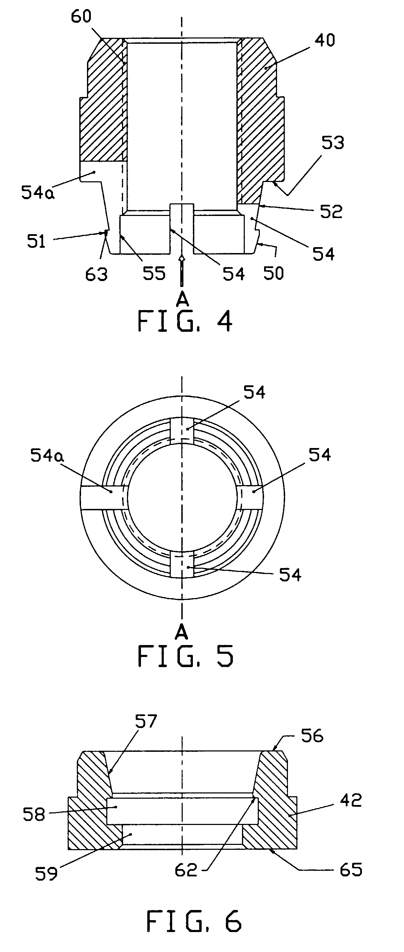

A male insertion cone (50), established in the dashpot plug (40), regulates the resilience and compression of the slotted area (54) in order to allow the cylindrical area (51) to be adapted at the box member (58) of the guide tube plug and, in its final position upon being released, the projection (63) will be anchored at the incut (62), as shown in figure 4.

A projection (51) providing anchorage between plugs, serves as a clamp to prevent the plugs (40, 42) from being drawn apart, which is also clear upon observing figures 4 and 6, and is shown particularly in figure 8.

The dashpot plug (40) has a male central engagement cone (52) which, upon the projection (51) being fitted at the housing or box member (58) of the guide tube plug (42), is adjusted at the cone (57) of the latter upon pressure being exerted by the guide tube screw (32) between the two without allowing the dashpot plug (40) to turn and centring the plugs. The plugs may also be fitted by pressing one against the other.

The box member (58) is also useful for receiving a tightening tool (not shown) in lieu of the screw (32) when the guide tube (43) expansions are provided.

The dashpot plug (40) has a seating (53) which stands on the facing (56) of the guide tube plug (42) when the guide tube screw (32) is tightened firmly, stabilising both plugs.

In order that both the conical area (50) and the projection (51) of the dashpot plug (40) may be adjusted and resilient, the latter has slots (54) along its generating lines, which are also visible in figure 4. An evacuation slot (54a) communicates the existing gaps between the adjustments of the plugs (40, 42) and the existing chamber between the guide tubes (43) and the dashpot tubes (41).

An entrance (55) in the dashpot plug (40) allows the screw (32) to be guided when the latter begins to be screwed.

The guide tube plug (42) includes a centring bore (59) facilitating the position of insertion of the guide tube screw (32), or tightening tool (not shown), guiding it until it penetrates the threaded entrance (55) of the dashpot plug (40), immediately after which entrance lies the thread (60) receiving said screw.

A funnel-shaped cone (61) leading into the dashpot (41) facilitates access of the control rods and adjusts its upper end, through a short cylindrical sector (67), onto the inside of the guide tube (43), slots being provided to allow the same to be adapted and mounted within said guide tube; it also prevents vibrations between both tubes upon being joined, as shown particularly in figure 8.

Once the plugs (40, 42) are mounted and engaged by the projection (51), they must remain together even if the screw (32) is removed and they must be able, on their own, to prevent the plug and the dashpot tube (40) and (41), respectively, from turning when it is newly screwed, to which end an interference area (64) is established between cones.

The guide tube plug (42) has a lower seating (65) through which it stands on the bottom head plate (10) when the screws (32) are mounted, and specifically on said surface (66) of said plate.

With reference once again to the upper end of the dashpot (41), the latter includes small slots (69), also along its generating lines, which facilitate the adjustment of its cylindrical portion (67) onto the inside of the guide tube (43), adjusting the diameters.

## Claims

1. A system for joining the bottom head, independent dashpot and reinforced guide tubes in nuclear reactor fuel elements, forming an assembly which includes a welded plug at the lower end of the guide tube the inside of which is a female truncated cone surface to facilitate the adaptability and clamping of the dashpot plug and next to it an internal box member receiving a projection of the same plug to form a permanent attachment between both plugs, and within said guide tube, another tube forming the dashpot with a plug welded at its lower end, its geometry consisting of a threaded through bore for the guide tube screw to be received inside the same and a truncated cone surface at the lower end that fits at the cone of the guide tube plug, with transverse slots for it to contract when inserted, by pressure or otherwise, an annular projection being established next to this truncated cone surface which is recessed at its upper end forming a right angle with the annular projection, which upon reaching the gap of the box member lying within the plug, retrieves its original shape and is permanently trapped with the guide tube plug, its upper end extending into another cone whereby, once the plugs are adjusted, such plugs are clamped in order not to allow the dashpot to turn when the screw is tightened in dashpot plug, characterised in that each guide tube plug (42) and each dashpot plug (40) is provided with cones (52) or (57) which are flat or have projections, fitting each other to determine an adjustment between the two that is capable of preventing them from turning as well as centring both members.

2. A system for joining the bottom head, independent dashpot and reinforced guide tubes in nuclear reactor fuel elements, as in claim 1, characterised in that it includes a second flat cone (50) with projections, ending in a cylindrical surface (51) extending into a facing (63) and at least a transverse slot (54) to allow the resilient deformation of this cone to be regulated as it slides along the cone (57).

3. A system for joining the bottom head, independent dashpot and reinforced guide tubes in nuclear reactor fuel elements, as in the preceding claims, characterised in that the dashpot plug (40) has at least a projection (63) and the guide tube plug (42) has a box member (58) in order that they are permanently housed and interconnected.

4. A system for joining the bottom head, independent dashpot and reinforced guide tubes in nuclear reactor fuel elements, as in the preceding claims, characterised in that the dashpot plug (40) includes at least an elongate slot (54a) communicating the chambers formed between the plugs (40, 42) with the gap existing between the outer diameter of the tube (41) and the inner diameter of the guide tube (43).

5. A system for joining the bottom head, independent dashpot and reinforced guide tubes in nuclear reactor fuel elements, as in the preceding claims, characterised in that the wall of the dashpot tube (41) has at least a through bore (44) for communicating the gap existing between said tube (41) and the guide tube (43) with the inner diameter of the dashpot.

6. A system for joining the bottom head, independent dashpot and reinforced guide tubes in nuclear reactor fuel elements, as in the preceding claims, characterised in that the inside of the dashpot plug (40) has a cylindrical entrance (55) to facilitate access of the screw (32) and absorb the transmission of a possible small permanent deformation of its projection (51).

7. A system for joining the bottom head, independent dashpot and reinforced guide tubes in nuclear reactor fuel elements, as in the preceding claims, characterised in that the upper end of the dashpot (41) has a short cylindrical sector (67) to adjust the tubes (41) and (43) and to enlarge the entrance cone (61).

8. A system for joining the bottom head, independent dashpot and reinforced guide tubes in nuclear reactor fuel elements, as in the preceding claims, characterised in that guide tube plug (42) is optionally internally provided with a cylindrical portion (59) at its lower end in order that the box member (58) may receive a tool to provide this plug with longitudinal tension against the bottom head when the guide tubes are provided with the expansions.

9. A system for joining the bottom head, independent dashpot and reinforced guide tubes in nuclear reactor fuel elements, as in the preceding claims, characterised in that the dashpot (41) includes slots (69) at its upper end to render the adjustment area resilient.
